# FASCICULE DE BREVET EUROPEEN

(11) **EP 1 334 882 B1**
(45) Date de publication et mention de la délivrance du brevet: **24.08.2005**
(21) Numéro de dépôt: 03290325.4
(22) Date de dépôt: 10.02.2003
(51) Int. Cl.: B60R 19/18, B60R 19/04

(54) **Piéce de poutre de pare-choc pour véhicule comportant deux absorbeurs de chocs et un barreau**
Stossfänger für ein Fahrzeug mit zwei Crashboxen und einem Träger
Piece of a bumper for a vehicle comprising two crashboxes and a beam

(30) Priorité: 08.02.2002 FR 0201554
(43) Date de publication de la demande: 13.08.2003
(73) Titulaire: PEGUFORM FRANCE, 27950 Saint Marcel (FR)
(72) Inventeur: Renault, Thierry, 27200 Vernon (FR); Ponsonnaille, Jean-Philippe, 27200 Vernon (FR)
(74) Mandataire: Martin, Jean-Jacques

(56) Documents cités:
- EP-A- 0 249 518
- EP-A- 0 937 611
- FR-A- 2 481 218
- FR-A- 2 668 436
- US-A- 5 271 650
- US-B1- 6 299 226

## Description

L'invention concerne les pare-chocs pour véhicule.

On connaît du document EP-0 937 611 au nom de la demanderesse, au mode de réalisation des figures 7 à 10, une poutre de pare-chocs, comprenant une pièce selon le préambule de la revendication 1, et formée par un barreau s'étendant sur toute la longueur de la poutre et comprenant deux absorbeurs de chocs s'étendant en creux vers l'arrière à partir d'une face avant du barreau. Les absorbeurs sont destinés à être fixés à deux longerons respectifs du véhicule pour supporter la poutre.

Ainsi que cela est expliqué dans ce document, les poutres fabriquées de nos jours doivent répondre de façon satisfaisante à deux types de chocs, entre autres.

Il s'agit d'une part des chocs parking (basse vitesse autour de 4 km/heure) dans lesquels on cherche à absorber une énergie du choc (autour de 500 J) par déformation élastique du pare-chocs et de la poutre de pare-chocs.

Il s'agit également du choc urbain (encore appelé choc ALLIANZ, choc DANNER ou choc à 15 km/heure). Dans celui-ci, la voiture est lancée contre un mur à 15 km/heure avec 40 % de sa largeur comme recouvrement. L'énergie absorbée est de l'ordre de 5 à 10 000 J. Le but de ce test est de limiter les coûts de réparation sur le véhicule et en particulier de limiter les dégâts au seul pare-chocs (peau et poutre). Il faut donc de préférence absorber l'énergie du choc tout en protégeant la structure du véhicule, en particulier ses longerons, pour limiter l'intrusion.

La poutre précitée a un comportement satisfaisant dans ces deux circonstances de choc. Toutefois, on a pu constater que le comportement des absorbeurs devenait instable si la longueur de l'absorbeur suivant la direction de marche du véhicule devient trop grande et en particulier dépasse 100 mm. De plus, l'absorbeur peut se trouver déstabilisé lorsque la poutre est galbée.

Un but de l'invention est de fournir une poutre de pare-chocs qui ait un comportement satisfaisant dans les chocs précités et dont les absorbeurs soient plus stables.

A cet effet, on prévoit selon l'invention une pièce de poutre de pare-chocs selon la revendication 1.

Les inventeurs ont en effet constaté avec surprise que la dissociation ou le découplage du barreau vis à vis des absorbeurs améliorait de façon très sensible la stabilité de ces derniers. Leur comportement en cas de choc se trouve amélioré même si leur longueur est importante et même si la poutre est galbée.

Des modes de réalisation avantageux sont énoncés aux revendications 2 à 15.

De préférence, comme énoncé à la revendication 9, les absorbeurs s'étendent en avant du support.

Les inventeurs ont en effet constaté que les absorbeurs sont en général plus stables lorsqu'ils s'étendent vers l'avant que lorsqu'ils s'étendent vers l'arrière. De surcroît, alors que l'on avait pu constater avec la poutre précitée de l'art antérieur que les points de fixation aux longerons étaient difficiles d'accès lors du montage, la présente configuration de la pièce facilite beaucoup cet accès.

On prévoit également selon l'invention une poutre de pare-chocs comprenant une pièce selon l'invention.

De préférence, la poutre est constituée par la pièce.

On prévoit encore selon l'invention un châssis de véhicule comprenant une pièce selon l'invention ou une poutre selon l'invention ainsi que deux longerons, la pièce étant fixée à une face avant des longerons.

De préférence, la base des absorbeurs, lorsqu'elle est formée par le support, est fixée aux longerons.

On prévoit enfin selon l'invention un pare-chocs de véhicule comprenant une poutre ou une pièce selon l'invention.

D'autres caractéristiques et avantages de l'invention apparaîtront encore à la lecture de la description suivante d'un mode préféré de réalisation et de variantes donnés à titre d'exemples non limitatifs. Aux dessins annéxés :
- la figure 1 est une vue en perspective partielle montrant la plus grande partie de la moitié droite d'une pièce pour pare-chocs selon l'invention ainsi qu'une partie du longeron associé à celle-ci ;
- la figure 2 est une vue schématique de l'extrémité du longeron de la figure 1 ;
- la figure 3 est une vue de détail en coupe montrant la fixation de la pièce et du longeron de la figure 1, la coupe étant réalisée suivant l'axe d'une des vis de fixation ;
- la figure 4 est une vue en coupe suivant le plan vertical IV-IV de la pièce et du longeron de la figure 1 ;
- la figure 5 est une vue en coupe suivant le plan vertical V-V de la pièce de la figure 1 ;
- les figures 6 et 7 sont des vues analogues à la figure 1 illustrant deux variantes de réalisation,
- les figures 8 et 9 sont deux vues en perspective partielle d'une pièce pour pare-chocs constituant une autre variante de l'invention ; et
- les figures 10 et 11 sont deux vues analogues à la figure 5 montrant respectivement la poutre de la figure 1 et celle des figures 8 et 9.

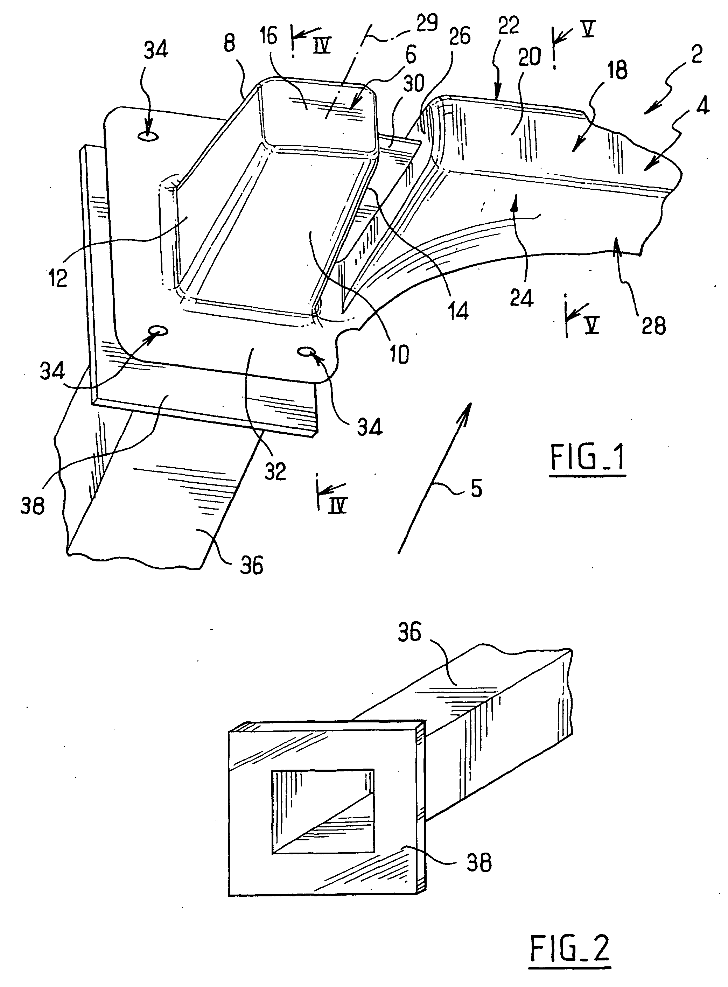

On a illustré aux figures 1 à 5 un mode préféré de réalisation d'une poutre de pare-chocs selon l'invention. Il peut s'agir d'un pare-chocs avant ou d'un pare-chocs arrière. En l'espèce, la poutre 2 est constituée par une pièce 4. Cette pièce a une forme allongée et est destinée à s'étendre suivant une direction transversale à la direction de marche 5 du véhicule, horizontalement.

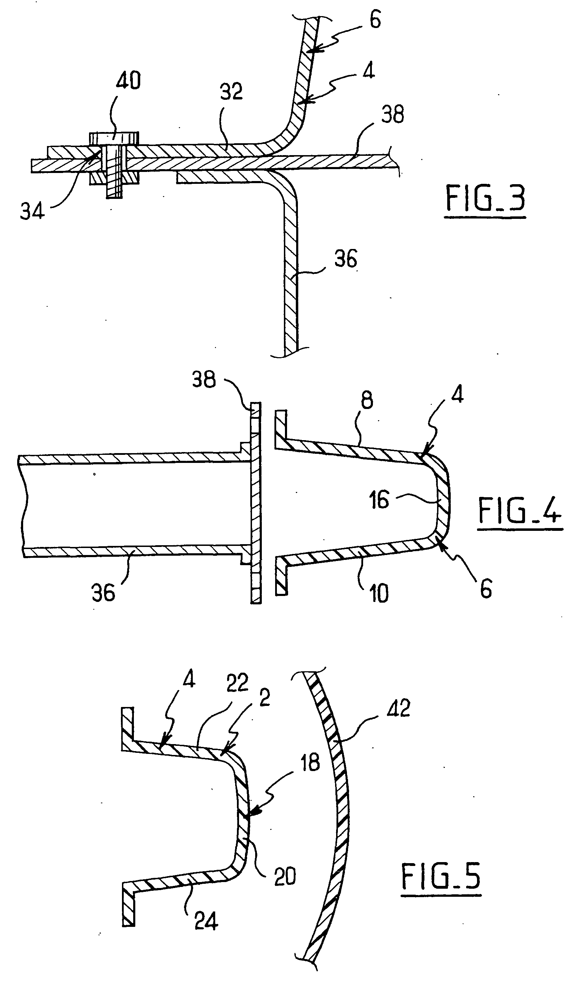

La pièce comprend deux absorbeurs de chocs 6 s'étendant respectivement au voisinage des extrémités longitudinales de la pièce 4. Chaque absorbeur comprend une paroi supérieure 8, une paroi inférieure 10, une paroi latérale externe 12 et une paroi latérale interne 14. Ces quatre parois 8, 10, 12 et 14 sont planes et donnent à l'absorbeur une forme de pot. Elles donnent à l'absorbeur, dans un plan perpendiculaire à la direction de marche du véhicule, une section transversale de forme rectangulaire. L'absorbeur comprend une paroi avant plane 16 s'étendant perpendiculairement à la direction de marche 5 du véhicule. Les parois latérales 12 et 14 vont en se rapprochant l'une de l'autre en direction de la paroi avant 16. Il en est de même pour les parois supérieure 8 et inférieure 10. Il s'ensuit que l'absorbeur va en se rétrécissant vers l'avant qu'il s'agisse de sa hauteur ou de sa largeur. Comme on le voit sur la figure 4, chaque absorbeur a un profil en C dans un plan de coupe vertical parallèle à la direction de marche 5 du véhicule et est ouvert sur sa face arrière.

La pièce 4 comprend d'autre part un barreau 18 s'étendant sur la plus grande partie de la longueur de la pièce dans une zone médiane de celle-ci située entre les deux absorbeurs 6 par référence à la direction longitudinale de la pièce. Le barreau 18 a une forme générale profilée ici suivant un axe rectiligne horizontal, est ouvert vers l'arrière et a une forme en « C » dans un plan transversal vertical parallèle à la direction de marche du véhicule comme le montre la figure 5. Il comprend en particulier une paroi avant 20, une paroi supérieure 22 et une paroi inférieure 24 toutes trois planes. Les extrémités latérales du barreau 18 sont formées respectivement par des parois planes droite 26 et gauche, cette dernière n'étant pas illustrée.

La pièce 4 comprend un support 28 auquel sont reliés les absorbeurs 6 et le barreau 18. Le support s'étend en particulier à partir du bord des absorbeurs et du barreau. Les absorbeurs et le barreau s'étendent en saillie du support en direction de l'avant du véhicule.

Comme on le voit sur la figure 1, les parois d'extrémités latérales du barreau s'étendent en regard des parois latérales internes des absorbeurs respectifs sensiblement parallèlement à celles-ci et à distance de celles-ci. Il en est par exemple ainsi des parois 26 et 14 illustrées sur la figure 1. La pièce 4 comprend pour chaque absorbeur une zone de jonction 30 s'étendant entre la paroi latérale de l'absorbeur concerné et la paroi latérale d'extrémité du barreau en regard de celle-ci. En l'espèce, chaque zone de jonction est formée par une nervure plane 30 s'étendant dans un plan horizontal. La nervure relie directement l'une à l'autre ces deux parois qui sont par ailleurs reliées à la naissance de l'absorbour et du barreau par le support 28.

Le support 28 forme autour de chaque absorbeur 6 une base rectangulaire essentiellement plane s'étendant dans un plan perpendiculaire à la direction de marche du véhicule et à un axe principal 29 de l'absorbeur et donc parallèle à la face 6. Au voisinage des quatre coins de cette base 32 sont ménagés des orifices 34 traversant l'épaisseur du support 28 pour sa fixation à des longerons 36 du véhicule.

Le barreau 18 ainsi que l'ensemble de la pièce 4 pourra éventuellement présenter un galbe en vue en plan.

Dans le présente exemple, le pare-chocs selon l'invention est destiné à être monté sur un véhicule dont le châssis comprend deux longerons 36 ayant une forme allongée et s'étendant chacun parallèlement l'un à l'autre suivant la direction de marche du véhicule. Chaque longeron a une forme profilée à section rectangulaire et présente à son extrémité avant une plaque de fixation 38, ouverte en son centre, s'étendant dans un plan perpendiculaire à la direction de marche du véhicule et latéralement en saillie du longeron 36, autour de celui-ci. Le longeron 36 ainsi que la plaque 38 étant réalisés en métal par exemple en acier, ils sont en l'espèce soudés l'un à l'autre.

Comme le montrent les figures 1 et 3, la pièce 4 formant la poutre de pare-chocs selon l'invention est fixée au moyen des bases 32 aux plaques 38 respectives des longerons et ce au moyen de quatre vis 40 traversant chacune l'épaisseur de la base 32 et de la plaque 38. On remarque que, à cet effet, chaque base 32 est parallèle à la plaque 38 associée avec laquelle elle réalise un contact surfacique et a des dimensions voisines de celles de la plaque 38.

La pièce 4 pourra être réalisée en matière synthétique composite par moulage, par compression ou injection, ou encore injection-compression. Plus précisément, il pourra s'agir d'une matière thermoplastique ou d'une matière thermodure, chacune pouvant être renforcée au besoin par des fibres telles que des fibres de verre ou des fibres de carbone. Ces fibres pourront être unidirectionnelles, groupées pour former des mats ou encore tissées les unes avec les autres. La pièce 4 est d'un seul tenant et sera réalisée en une seule opération de moulage.

De préférence, comme illustré à la figure 3, on prévoira que les faces 8, 10, 12 et 14 de chaque absorbeur s'étendent dans le prolongement des quatre faces formant le longeron 36 associé.

Le pare-chocs selon l'invention pourra en outre comporter une peau 42 s'étendant en avant et à distance de la poutre 2.

Un tel pare-chocs a un comportement satisfaisant lors d'un choc parking et lors d'un choc urbain. En particulier, les absorbeurs présentent une bonne stabilité en raison du fait qu'ils s'étendent vers l'avant et en raison de leur éloignement du barreau.

De plus, lors du montage l'accès aux points de fixation 34 est facile.

La géométrie de la pièce 4 permet de dissocier lors d'un choc urbain le dégalbage de la poutre et l'écrasement des absorbeurs afin de ne pas déstabiliser ces derniers. La disposition des parois latérales de chaque absorbeur dans le prolongement des parois du longeron permet de charger celui-ci en effort de façon optimisée et avec une bonne répartition des efforts.

Pour la fabrication, il n'est pas nécessaire de prévoir des mouvements de pièces à l'intérieur du moule et le démoulage est aisé à effectuer.

Comme illustré à la figure 4, on pourra prévoir que la paroi avant des longerons 38 s'étend sur toute la face avant de ceux-ci sans présenter par conséquent une ouverture débouchant dans les longerons.

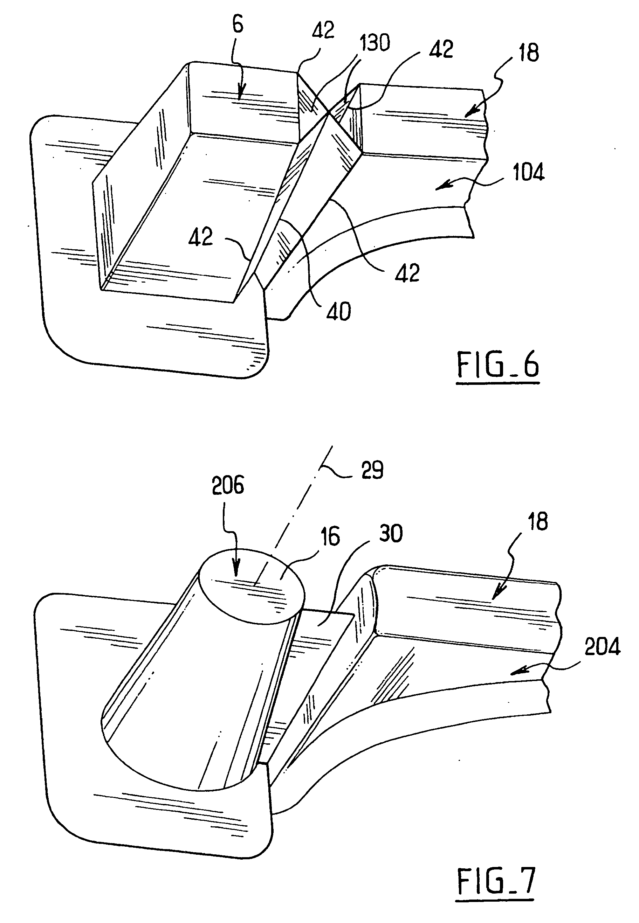

On a illustré à la figure 6 une variante de réalisation du pare-chocs de la figure 1. Cette variante se distingue par le fait que, sur la poutre 104, la zone de jonction reliant la face latérale de chaque absorbeur à la face latérale correspondante du barreau comprend au moins deux nervures 130.

En l'espèce, les deux nervures sont disposées en croisillon de sorte qu'elles se coupent à leur ligne médiane commune 40. Cette ligne est horizontale. Les nervures relient les arrêtes respectives 42 de l'absorbeur et du barreau opposées de part et d'autre de cette ligne.

Une autre variante est illustrée à la figure 7. Cette fois, sur la poutre 204, la nervure 30 est identique à celle de la figure 1 mais chaque absorbeur 106 a une forme tronconique, la plus petite section du cône formant la face avant 16. L'axe 29 forme l'axe du cône.

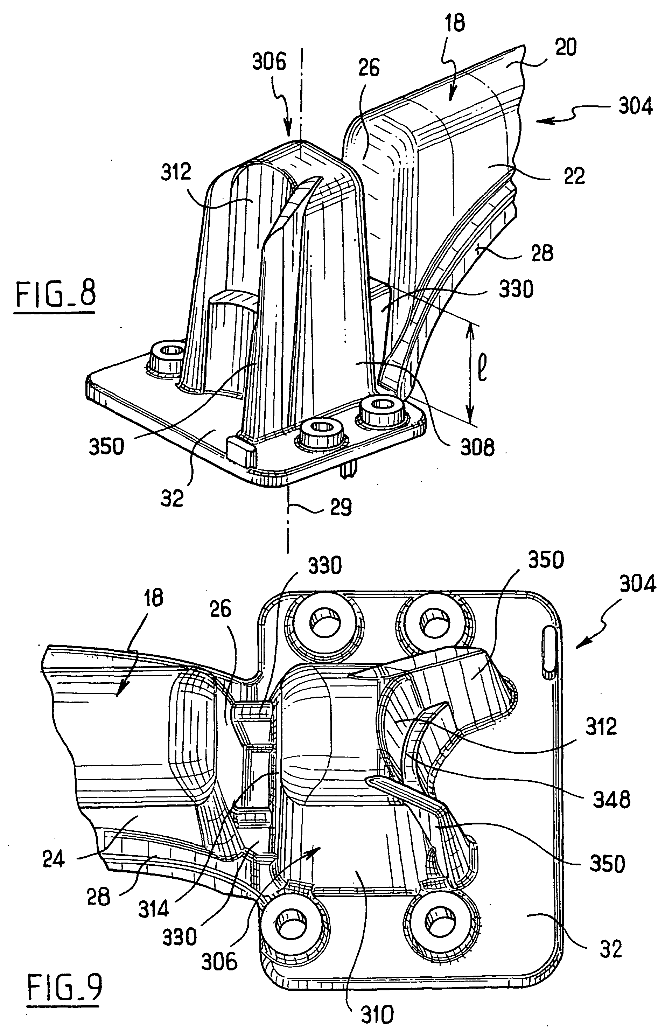

La poutre 304 illustrée aux figures 8 et 9 constitue une autre variante de l'invention, identique aux précédentes poutres ci-dessus sauf pour les aspects qui vont être développés ci-après.

Dans le présent exemple, la zone de jonction s'étendant pour chaque absorbeur 306 entre la paroi latérale 314 de l'absorbeur et la paroi latérale d'extrémité du barreau 18 est formée par deux nervures planes 330. Les deux nervures sont de façon générale similaires à la nervure 30 des figures 1 et 7. Elles s'étendent l'une au-dessus de l'autre, parallèlement l'une à l'autre et en regard l'une de l'autre. Toutefois, la longueur l des nervures 330, (la même pour les deux), mesurée parallèlement à l'axe 29 est inférieure à celle des nervures 30 des figures 1 et 7. Ici, la longueur de chaque nervure 330, est environ égale à la moitié de la longueur de la paroi latérale externe 26 du barreau. De façon générale, on pourra prévoir que la longueur l est inférieure à la longueur de l'absorbeur et à la longueur de la paroi latérale du barreau et même comprise entre 1/4 et 3/4 de chacune d'elles, voire entre 1/3 et 2/3 de chacune d'elles.

Par ailleurs, la paroi latérale externe 312 de chaque absorbeur 306 est profilée pour avoir la forme d'un secteur de cylindre (ou de tronc de cône alternativement) dont l'axe serait parallèle à l'axe 29 et situé à l'extérieur de l'absorbeur, en regard de cette face. Cela rétrécit la largeur de la section horizontale de l'absorbeur dans sa partie médiane.

Cette face 312 présente en outre un décrochement 348 venant du fait qu'elle consiste en fait en deux facettes élémentaires décalées l'une par rapport à l'autre suivant la longueur de la pièce 304. La facette la plus en arrière, contiguë à la base 32, s'étend plus à l'extérieur que l'autre facette, la plus en avant. La facette arrière élargit ainsi la base de l'absorbeur.

A l'endroit de la jonction de cette face 312 avec les faces supérieure 308 et inférieure 310 dont les parois forment avec les autres parois un corps de l'absorbeur, chaque absorbeur présente des nervures ou ailettes 350 s'étendant vers l'extérieur en saillie du corps de l'absorbeur en direction opposée à l'absorbeur en étant respectivement inclinées vers le haut et le bas. Dans le présent exemple, l'ailette supérieure s'étend plus loin vers l'extérieur que l'ailette inférieure.

Cette variante est considérée sous certains égards comme plus avantageuse que la pièce illustrée aux figures 1 à 5.

En effet, on considère souvent que l'effort moyen que peut encaisser un longeron 36 du véhicule est de 80 kN. Cela étant, la répartition d'effort admissible sur les quatre faces du longeron est de 25 kN sur les faces intérieure, extérieure et inférieure, et de 15 kN sur la face supérieure.

On a constaté que la poutre des figures 1 à 5 permettait de transmettre un effort moyen de 80 kN lors des essais sur un bati rigide indéformable, mais aussi que la poutre, une fois montée sur un longeron, venait déformer le longeron sur sa face intérieure. Cela s'explique par une répartition des efforts par face qui est de 40 kN environ pour la face intérieure, 15 kN pour les faces supérieure et inférieure et 5 kN pour la face extérieure.

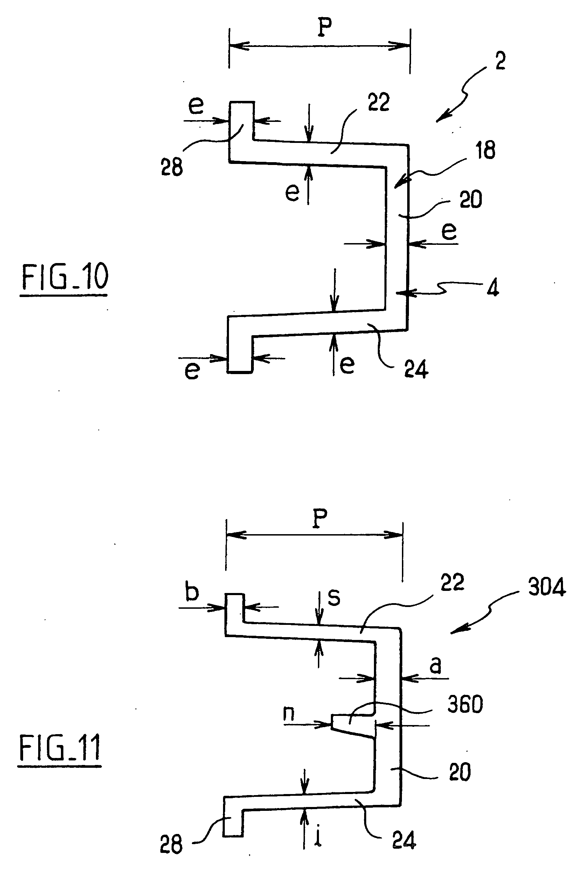

La variante illustrée aux figures 8 à 9 vise à pallier cet inconvénient. Sur celle-ci, l'épaisseur du barreau 18 a été réduite à certains endroits et augmentée à d'autres par rapport au mode de réalisation des figures 1 à 5. Ainsi, comme illustré sur la figure 10, qui montre la section centrale Yo de la poutre de la figure 1, l'épaisseur e de la poutre 4 était identique sur les parois avant 20, supérieure 22 et inférieure 24 du barreau 18 et sur le support 28. Cette épaisseur valait par exemple 9 mm. En revanche, sur la poutre 304 de la figure 11, qui montre elle aussi la section Y₀ et qui correspond à celle des figures 8 et 9, l'épaisseur a de la paroi avant 20 vaut 9 mm, celles s et i des parois supérieure 22 et inférieure 24 valent 4 mm tandis que l'épaisseur b de la base 28 vaut 10 mm.

La longueur des nervures 330 est faible afin que celles-ci ne soient pas impactées lors du choc Danner. Enfin les nervures ou ailettes 350 ont été ajoutées pour mieux mettre en charge la paroi extérieure du longeron ainsi que ses parois supérieure et inférieure. Du fait de ces modifications, la zone de liaison entre la poutre et l'absorbeur est affaiblie.

Afin de mieux passer le choc parking, la profondeur p du barreau suivant la direction 29 a été augmentée pour accroître son inertie et l'épaisseur des parties du barreau a également été augmentée à certains endroits comme indiqué ci-dessus, le tout pour le rigidifier davantage. Précisément, tandis que, en référence à la figure 10, la profondeur p du barreau 4 (sa dimension hors-tout suivant l'axe 29, au centre de la poutre) était de 40 mm, elle est de 48 mm sur le barreau 304 de la figure 11.

De plus, une nervure interne plane horizontale 360 a été ajoutée, s'étendant vers l'arrière à partir de la face interne de la paroi avant 20. Elle s'étend à mi-hauteur de cette paroi, sur une longueur n, mesurée suivant l'axe 29, de 10 mm. Cette longueur n est donc inférieure à la moitié de la profondeur p.

Bien entendu, on pourra apporter à l'invention de nombreuses modifications sans sortir du cadre de celle-ci.

On pourra en particulier modifier la configuration des absorbeurs et du barreau.

Indépendamment de la fourniture d'une pièce de poutre de pare-chocs dans laquelle les absorbeurs sont distants du barreau, on pourra prévoir une pièce de poutre de pare-chocs dans laquelle les absorbeurs s'étendent vers l'avant de la pièce (qu'ils soient ou pas distants du barreau), par exemple en saillie du support.

## Revendications

1. Pièce (4 ; 104 ; 204 ; 304) de poutre (2) de pare-chocs pour véhicule, la pièce comportant deux absorbeurs de chocs (6 ; 206 ; 306) et un barreau (18) formé dans une zone médiane s'étendant entre les absorbeurs par référence à une direction longitudinale de la pièce, **caractérisée en ce que** les absorbeurs (6 ; 206) sont distants du barreau (18).

2. Pièce selon la revendication 1, **caractérisée en ce qu'**elle comprend pour chaque absorbeur (6) une zone de jonction (30 ; 130 ; 330) reliant une face latérale (14) de l'absorbeur à une face latérale (26) du barreau et s'étendant entre les deux faces.

3. Pièce selon la revendication précédente, **caractérisée en ce que** la zone de jonction comprend au moins une nervure (30 ; 130 ; 330), de préférence plane.

4. Pièce selon la revendication précédente, **caractérisée en ce que** la ou chaque nervure est agencée en vue de s'étendre horizontalement.

5. Pièce selon l'une quelconque des revendications 2 à 4, **caractérisée en ce que** la zone de jonction comprend deux nervures (130 ; 330).

6. Pièce selon l'une quelconque des revendications 3 à 5, **caractérisée en ce que** la ou chaque nervure (330) a une longueur (l), mesurée suivant une direction de marche (29) du véhicule, inférieure aux deux tiers de la longueur de l'absorbeur (306).

7. Pièce selon l'une quelconque des revendications précédentes, **caractérisée en ce que** l'absorbeur (306) comprend un corps principal et au moins une ailette (350) s'étendant en saillie du corps d'un côté du corps opposé au barreau (18), l'ailette s'étendant en contact avec une base (32) de l'absorbeur.

8. Pièce selon l'une quelconque des revendications précédentes, **caractérisée en ce qu'**elle comprend un support (28) en saillie duquel s'étendent les absorbeurs (6 ; 206 ; 306) et le barreau (18).

9. Pièce selon la revendication précédente, **caractérisée en ce que** les absorbeurs (6 ; 206 ; 306) s'étendent en avant du support (28).

10. Pièce selon l'une quelconque des revendications 8 ou 9, **caractérisée en ce que** le barreau (18) s'étend en avant du support (28).

11. Pièce selon l'une quelconque des revendications 8 à 10, **caractérisée en ce que**, pour chaque absorbeur, le support (28) forme une base plane (32) de l'absorbeur s'étendant dans un plan perpendiculaire à un axe principal (29) de l'absorbeur.

12. Pièce selon l'une quelconque des revendications précédentes, **caractérisée en ce que** chaque absorbeur (6) comprend au moins quatre faces planes (8, 10, 12, 14).

13. Pièce selon l'une quelconque des revendications précédentes, **caractérisée en ce que** chaque absorbeur (206) a une forme tronconique.

14. Pièce selon l'une quelconque des revendications précédentes, **caractérisée en ce que** les absorbeurs sont ouverts du côté d'une face arrière de la pièce.

15. Pièce selon l'une quelconque des revendications précédentes, **caractérisée en ce que** le barreau (18) est ouvert du côté d'une face arrière de la pièce.

16. Poutre (4 ; 104 ; 204 ; 304) de pare-chocs pour véhicule, **caractérisée en ce qu'**elle comprend une pièce (2) selon l'une des revendications précédentes.

17. Poutre selon la revendication 16, **caractérisée en ce qu'**elle est constituée par la pièce (2).

18. Châssis de véhicule comprenant une pièce selon l'une des revendications 1 à 15 ou une poutre selon l'une des revendications 16 ou 17 ainsi que deux longerons (36), **caractérisé en ce que** la pièce est fixée à une face avant des longerons.

19. Châssis selon la revendication précédente dans lequel la pièce (4) est conforme à la revendication 11, **caractérisé en ce que** la base (32) des absorbeurs (6 ; 206 ; 306) formée par le support est fixée aux longerons (36).

20. Pare-chocs de véhicule, **caractérisé en ce qu'**il comprend une pièce selon l'une des revendications 1 à 15 ou une poutre selon l'une des revendications 16 ou 17.

## Patentansprüche

1. Träger(2)-Bauteil (4; 104; 204; 304) zum Stoßauffangen für ein Fahrzeug, wobei das Bauteil zwei Stoßabsorber (6; 206; 306) und einen Stab (18) umfaßt, der in einer mittleren Zone ausgebildet ist, die sich zwischen den Absorbern in Bezug auf eine Längsrichtung des Bauteils erstreckt, **dadurch gekennzeichnet, daß** die Absorber (6; 206) zum Stab (18) beabstandet sind.

2. Bauteil nach Anspruch 1, **dadurch gekennzeichnet, daß** es für jeden Absorber (6) eine Verbindungszone (30; 130; 330) umfaßt, die eine seitliche Fläche (14) des Absorbers mit einer seitlichen Fläche (26) des Stabes verbindet und sich zwischen den beiden Flächen erstreckt.

3. Bauteil nach dem vorhergehenden Anspruch, **dadurch gekennzeichnet, daß** die Verbindungszone mindestens eine Rippe (30; 130; 330) umfaßt, und zwar bevorzugt eine ebene.

4. Bauteil nach dem vorhergehenden Anspruch, **dadurch gekennzeichnet, daß** die oder jede Rippe so eingerichtet ist, daß sie sich horizontal erstreckt.

5. Bauteil nach einem der Ansprüche 2 bis 4, **dadurch gekennzeichnet, daß** die Verbindungszone zwei Rippen (130; 330) umfaßt.

6. Bauteil nach einem der Ansprüche 3 bis 5, **dadurch gekennzeichnet, daß** die oder jede Rippe (330) eine Länge (l) hat, gemessen in Fahrtrichtung (29) des Fahrzeugs, die kleiner ist als zwei Drittel der Länge des Absorbers (306).

7. Bauteil nach einem der vorhergehenden Ansprüche,
**dadurch gekennzeichnet, daß** der Absorber (306) einen Hauptkörper und mindestens einen Flügel (350) umfaßt, der sich, vom Körper vorspringend, von einer Seite des Körpers aus erstreckt, die vom Stab (18) abweist, wobei sich der Flügel in Berührung mit einer Grundfläche (32) des Absorbers erstreckt.

8. Bauteil nach einem der vorhergehenden Ansprüche, **dadurch gekennzeichnet, daß** es eine vorspringende Abstützung (28) aufweist, von der aus sich die Absorber (6; 206; 306) und der Stab (18) erstrecken.

9. Bauteil nach dem vorhergehenden Anspruch, **dadurch gekennzeichnet, daß** sich die Absorber (6; 206; 306) vor der Abstützung (28) erstrecken.

10. Bauteil nach einem der Ansprüche 8 oder 9, **dadurch gekennzeichnet, daß** sich der Stab (18) vor der Abstützung (28) erstreckt.

11. Bauteil nach einem der Ansprüche 8 bis 10, **dadurch gekennzeichnet, daß** die Abstützung (28) für jeden Absorber ein ebenes Unterteil (32) des Absorbers bildet, das sich in einer Ebene senkrecht zu einer Hauptachse (29) des Absorbers erstreckt.

12. Bauteil nach einem der vorhergehenden Ansprüche, **dadurch gekennzeichnet, daß** jeder Absorber (6) mindestens vier ebene Flächen (8, 10, 12, 14) umfaßt.

13. Bauteil nach einem der vorhergehenden Ansprüche, **dadurch gekennzeichnet, daß** jeder Absorber (206) Kegelstumpfform hat.

14. Bauteil nach einem der vorhergehenden Ansprüche, **dadurch gekennzeichnet, daß** die Absorber auf der Seite einer hinteren Fläche des Bauteils offen sind.

15. Bauteil nach einem der vorhergehenden Ansprüche, **dadurch gekennzeichnet, daß** der Stab (18) auf der Seite einer hinteren Fläche des Bauteils offen ist.

16. Stoßdämpferträger (4; 104; 204; 304) für ein Fahrzeug,
**dadurch gekennzeichnet, daß** er ein Bauteil (2) nach einem der vorhergehenden Ansprüche umfaßt.

17. Träger nach Anspruch 16, **dadurch gekennzeichnet, daß** er von dem Bauteil (2) gebildet ist.

18. Fahrzeugfahrgestell, das ein Bauteil nach einem der Ansprüche 1 bis 15 oder einen Träger nach einem der Ansprüche 16 oder 17 sowie zwei Längsholme (36) umfaßt, **dadurch gekennzeichnet, daß** das Bauteil an einer vorderen Fläche der Längsholme befestigt ist.

19. Fahrgestell nach dem vorhergehenden Anspruch, in welchen das Bauteil (4) nach Anspruch 11 ausgebildet ist, **dadurch gekennzeichnet, daß** das Unterteil (32) der Absorber (6; 206; 306), das durch die Abstützung gebildet ist, auf den Längsholmen (36) befestigt ist.

20. Fahrzeugstoßdämpfer, **dadurch gekennzeichnet, daß** er ein Bauteil nach einem der Ansprüche 1 bis 15 oder einen Träger nach einem der Ansprüche 16 oder 17 umfaßt.

## Claims

1. A part (4; 104; 204; 304) for a vehicle bumper beam (2), the part comprising two impact absorbers (6; 206; 306) and a bar (18) formed in a mid-zone extending between the impact absorbers relative to a longitudinal direction of the part, the part being **characterized in that** the impact absorbers (6; 206) are at a distance from the bar (18).

2. A part according to claim 1, **characterized in that** for each impact absorber (6) it includes a junction zone (30; 130; 330) connecting a side face (14) of the impact absorber to a side face (26) of the bar, and extending between the two faces.

3. A part according to the preceding claim, **characterized in that** the junction zone comprises at least one web (30; 130; 330), preferably a plane web.

4. A part according to the preceding claim, **characterized in that** the or each web is arranged in order to extend horizontally.

5. A part according to any one of claims 2 to 4, **characterized in that** the junction zone comprises two webs (130; 330).

6. A part according to any one of claims 3 to 5, **characterized in that** the or each web (330) presents a length (ℓ) measured in a travel direction (29) of the vehicle that is less than two-thirds the length of the impact absorber (306).

7. A part according to any preceding claim, **characterized in that** the impact absorber (306) comprises a main body and at least one fin (350) projecting from the body from a side of the body opposite from the bar (18), the fin extending in contact with a base (32) of the impact absorber.

8. A part according to any preceding claim, **characterized in that** it includes a projecting support (28) from which there extend the impact absorbers (6; 206; 306) and the bar (18).

9. A part according to the preceding claim, **characterized in that** the impact absorbers (6; 206; 306) extend in front of the support (28).

10. A part according to claim 8 or claim 9, **characterized in that** the bar (18) extends in front of the support (28).

11. A part according to any one of claims 8 to 10, **characterized in that**, for each impact absorber, the support (28) forms a plane base (32) of the impact absorber extending in a plane perpendicular to a main axis (29) of the impact absorber.

12. A part according to any preceding claim, **characterized in that** each impact absorber (6) has at least four plane faces (8, 10, 12, 14).

13. A part according to any preceding claim, **characterized in that** each impact absorber (206) is frustoconical in shape.

14. A part according to any preceding claim, **characterized in that** the impact absorbers are open beside a rear face of the part.

15. A part according to any preceding claim, **characterized in that** the bar (18) is open beside a rear face of the part.

16. A vehicle bumper beam (4; 104; 204; 304), **characterized in that** it comprises a part (2) according to any preceding claim.

17. A beam according to claim 16, **characterized in that** it is constituted by the part (2).

18. A vehicle chassis comprising a part according to any one of claims 1 to 15 or a beam according to claim 16 or claim 17, together with two side members (36), the chassis being **characterized in that** the part is fastened to front faces of the side members.

19. A chassis according to the preceding claim in with the part (4) is in accordance with claim 11, **characterized in that** the base (32) of each impact absorber (6; 206; 306) formed by the support is fixed to a corresponding one of the side members (36).

20. A vehicle bumper, **characterized in that** it comprises a part according to any one of claims 1 to 15, or a beam according to claim 16 or claim 17.
